# EUROPEAN PATENT APPLICATION

(11) **EP 3 056 325 A1**
(43) Date of publication of application: **17.08.2016**
(21) Application number: 15157021.5
(22) Date of filing: 27.02.2015
(51) Int. Cl.: B26D 3/26, B26D 1/157, B26D 1/16, B26D 3/28, B26D 7/06, A47J 43/25, A47J 43/07, B26D 7/00, B26D 7/18

(54) **MULTIPLE VEGETABLE CUTTING APPARATUS**

(30) Priority: 13.02.2015 JP 2015125944
(71) Applicant: Matsumoto, Eiji, Saitama (JP)
(72) Inventor: Matsumoto, Eiji, Saitama (JP)
(74) Representative: Novagraaf Technologies

(57) **Abstract**

A multiple vegetable cutting apparatus having a simple configuration, being easy to be assembled, which, as a single apparatus, can be used with the specification being varied, depending upon the vegetable type, and the cutting way, thus being economical. The multiple vegetable cutting apparatus includes a main body (1), supported by a base (2); a receiving tray (3), installed on the main body for receiving and discharging a vegetable cut; a dish-like rotating disk, disposed inside of top face of the receiving tray and having a blade for cutting vegetables fed; a driving unit, incorporated in the main body for rotation-driving the rotating disk; a cover (6), having an adapter receiver (7) in a location corresponding to the rotating disk, and covering the receiving tray; and a vegetable charging adapter (8), set inside the adapter receiver, and having plural forms of vegetable charging parts (24) corresponding to the vegetable types and/or the cutting ways.

## Description

### BACKGROUND OF THE INVENTION

### Field of the Invention

The present invention relates to a multiple vegetable cutting apparatus, and more particularly to a multiple vegetable cutting apparatus for cutting cabbages, carrots, burdocks, long green onions, onions, cucumbers, and other vegetables, fruits, and mushrooms and other foodstuffs (hereinafter to be simply referred to as "vegetables") by various ways of cutting, such as cutting in round slices, slicing, finely chopping, diagonal cutting, and shredding.

### Description of the Related Art

Not only in the foodstuff factories, bento factories, supermarkets, and restaurants, but also in recent years, in the eating-out chain restaurants, the cut articles of vegetables are being demanded in quantity, however, manufacturing sliced vegetables manually in response to such demands is, of course, non-efficient, and thus will never make any significant profit. Then, in order to meet such demands, there have been proposed various apparatuses, and have been made into products.

As an example of such vegetable cutting apparatuses, there is available a vegetable slicer disclosed in Japanese Unexamined Patent Application Publication No. 2012-240136. As shown in FIG. 8, this vegetable slicer is configured to include a rotating base plate 61, being eccentrically provided with a circular opening 62; a round blade 63, being disposed in the inside of the circular opening 62 with an appropriate clearance being held between the round blade 63 and the inner edge part of the circular opening 62; a rotating case 65, being fixed to a motor shaft as a rotation driving power source, the motor shaft extending through a shaft cylinder 64; a fixed sun gear 66, being disposed inside the rotating case 65 and fixed to the motor shaft, and a planetary gear 67, being meshed with the fixed sun gear 66.

The rotating base plate 61 is rotated integrally with the rotating case 65, being mounted to the rotating case 65, while the planetary gear 67 being fixed to the rotating shaft 68 of the round blade 63. Thus, the round blade 63 rotates at high speed on its own axis with the rotation of the planetary gear 67, which is meshed with the fixed sun gear 66, while revolving integrally with the rotating base plate 61, and at the time of being passed under the vegetable charging port, cuts vegetables in round slices that have been charged.

With this vegetable slicer, the rotating base plate 61 is fixed to the case 65, which is screw-fastened to the motor shaft, and it is not schemed that the rotating base plate 61 is freely detachable. In other words, it is not utterly schemed that, depending upon the type of the vegetable, and upon the way of cutting, the rotating base plate 61 having a different type of blade is selected for use. In addition, with this vegetable slicer, the number of component parts is large, and assembling the respective parts is made by using screws, and the like, resulting in much time and labor being required.

Patent Literature 1: Japanese Unexamined Patent Application Publication No. 2012-240136
Patent Literature 2: Japanese Patent No. 3817588

As described above, the vegetable cutting apparatus which has been conventionally proposed is restricted for the method of use, being not utterly schemed that it, as a single apparatus, is used with the specification thereof being varied, depending upon the type of vegetable to be cut, and the way of cutting, and has presented problems that the number of component parts is large, and assembling the respective parts is made by using screws, and the like, resulting in much time and labor being required.

Then, it is an object of the present invention to provide a multiple vegetable cutting apparatus which has a simple configuration, being easy to be assembled; which, as a single apparatus, can be used with the specification thereof being varied, depending upon the type of vegetable to be cut, and upon the way of cutting, and thus which is economical.

### SUMMARY OF THE INVENTION

In order to achieve the above-described object, the invention in accordance with claim 1 provides a multiple vegetable cutting apparatus, including a main body part, being supported by a base; a receiving tray, being installed on the main body part for receiving and discharging a vegetable which has been cut; a rotating disk, being dish-like, being disposed inside of the top face of the receiving tray and having a blade for cutting vegetables, having been fed; a driving unit, being incorporated in the main body part for rotation-driving the rotating disk; a cover, having an adapter receiver in a location corresponding to the rotating disk, and covering the receiving tray; and a vegetable charging adapter, being set in the inside of the adapter receiver, the vegetable charging adapter having a plurality of forms of vegetable charging parts that correspond to the types of vegetable to be cut and/or the ways of vegetable cutting.

In one embodiment, the adapter receiver is cylindrical, and the vegetable charging adapter is provided with a circular arc-shaped clearance at the outer peripheral face thereof for accommodating an upper edge part of the adapter receiver, thereby being freely installable on the adapter receiver from thereabove, the inner peripheral face of the adapter receiver being provided with convex portions which correspond to the concave portions that are provided at the outer peripheral face of the vegetable charging adapter.

In another embodiment, one of the vegetable charging parts of the vegetable charging adapter is a diagonal cutting charging part having an inclined face. In another embodiment, one of the vegetable charging parts of the vegetable charging adapter provides a tubular charging hole, and specifically, the charging hole is implemented as a plurality of holes having different inner diameters.

In another embodiment, the vegetable charging adapter is divided into a plurality of segments, which can be used in combination or individually. One of the segments of the vegetable charging adapter which is divided is a fan-shaped adapter, the fan-shaped adapter allowing cutting of a vegetable while pressing it against the internal side face or external side face thereof, and allowing different types of cutting to be made by changing the installation location thereof with respect to the adapter receiver.

In another embodiment, the receiving tray is supported by the main body part such that the inclination angle thereof is changeable, and the rotating disk is freely detachable from a motor shaft, and freely exchangeable.

The present invention is as described above, offering advantages that the multiple vegetable cutting apparatus in accordance with the present invention has a simple configuration, being easy to be assembled, and allows selection of a charging hole for feeding vegetables and a type of blade, according to the type of vegetable to be cut and the way of cutting, thus being capable, as a single unit, of cutting of various vegetables, fruits, mushrooms, and other foodstuffs by various ways of cutting, such as cutting in round slices, slicing, finely chopping, diagonal cutting, and shredding, and therefore being extremely economical.

### BRIEF DESCRIPTION OF THE DRAWINGS

FIG. 1 is a perspective view illustrating an example of entire configuration of a multiple vegetable cutting apparatus in accordance with the present invention;
   FIG. 2 is an exploded perspective view of the multiple vegetable cutting apparatus in accordance with the present invention;
   FIG. 3 is a perspective view illustrating an example of another configuration of a rotating disk of the multiple vegetable cutting apparatus in accordance with the present invention;
   FIG. 4 is a perspective view illustrating an example of configuration of a vegetable charging adapter of the multiple vegetable cutting apparatus in accordance with the present invention;
   FIG. 5 is a perspective view illustrating the method of mounting the rotating disk to a motor shaft of the multiple vegetable cutting apparatus in accordance with the present invention;
   FIG. 6 is a vertical sectional view illustrating a planetary gear driving mechanism for a round blade in the rotating disk of the multiple vegetable cutting apparatus in accordance with the present invention;
   FIG. 7 is an exploded perspective view illustrating the planetary gear driving mechanism for the round blade in the rotating disk of the multiple vegetable cutting apparatus in accordance with the present invention; and
   FIG. 8 is a partially cutaway perspective view illustrating the configuration of a round blade rotation mechanism which has been adopted in a conventional vegetable slicer.

### DETAILED DESCRIPTION OF THE PREFERRED EMBODIMENT

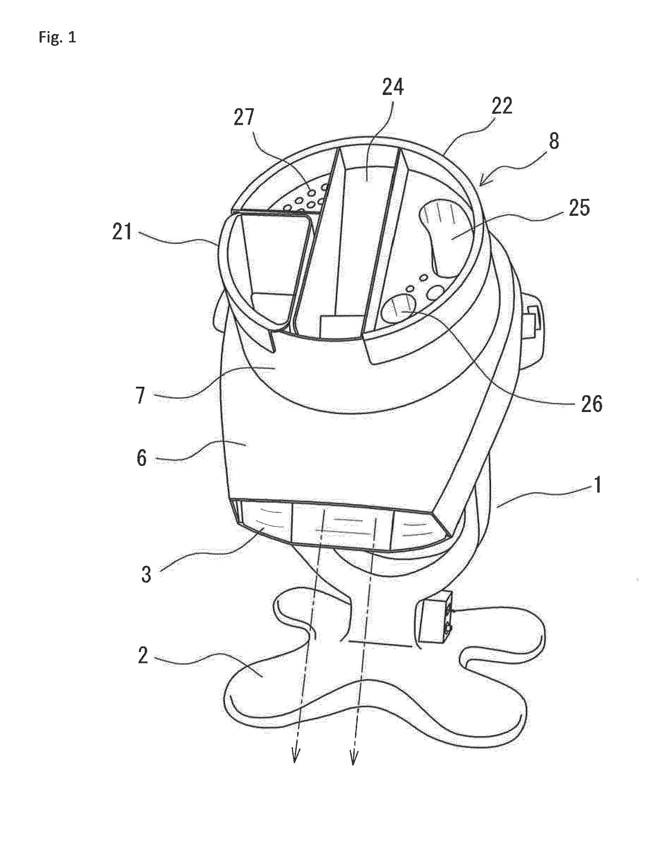

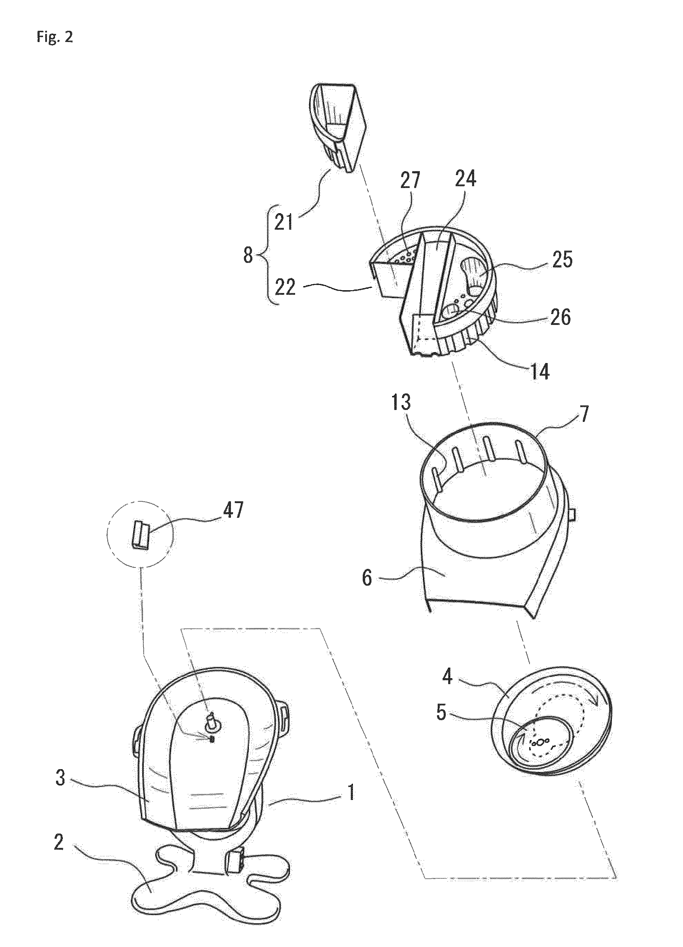

Hereinbelow, an embodiment of the present invention will be explained with reference to the attached drawings. The multiple vegetable cutting apparatus in accordance with the present invention is capable, as a single unit, of cutting various types of vegetable to be cut by various ways of cutting, FIG. 1 being a perspective view illustrating the entire configuration thereof, and FIG. 2 being an exploded perspective view thereof.

As shown in FIG. 2, the present apparatus includes a main body part 1, which is supported by a base 2; a receiving tray 3, which is installed on the main body part 1 for receiving and discharging a vegetable which has been cut; a rotating disk 4, which is dish-like, being disposed inside of the top face of the receiving tray 3 and having a blade for cutting vegetables which have been fed; a driving unit, which is incorporated in the main body part 1 for rotation-driving the rotating disk 4; a cover 6, which has an adapter receiver 7 in a location corresponding to the rotating disk 4, and covers the receiving tray 3; and a vegetable charging adapter 8, which is set in the inside of the adapter receiver 7, the vegetable charging adapter 8 having a plurality of forms of vegetable charging parts that correspond to the types of vegetable to be cut and/or the ways of vegetable cutting.

The receiving tray 3 is opened at one end part (the lower end part in FIGS. 1 and 2), and from the open end, the vegetables which have cut and dropped are discharged. Although not shown, a recovery container for recovering the vegetables which have been cut and dropped is disposed under the open end part. The receiving tray 3 is mounted to the main body part 1 such that the inclination angle thereof is changeable. In other words, in the upper end part of the main body part 1, there is provided a pivotally supporting part for pivotally supporting the rear face of the receiving tray 3, by which the receiving tray 3 is pivotally supported such that it can be inclined steplessly or in steps (for example, at 0 degrees, 30 degrees, 45 degrees, 60 degrees, and 90 degrees) from the horizontal state to the vertical state. As described later, at the front face of the receiving tray 3, a stopper 47 is provided in a protruded manner.

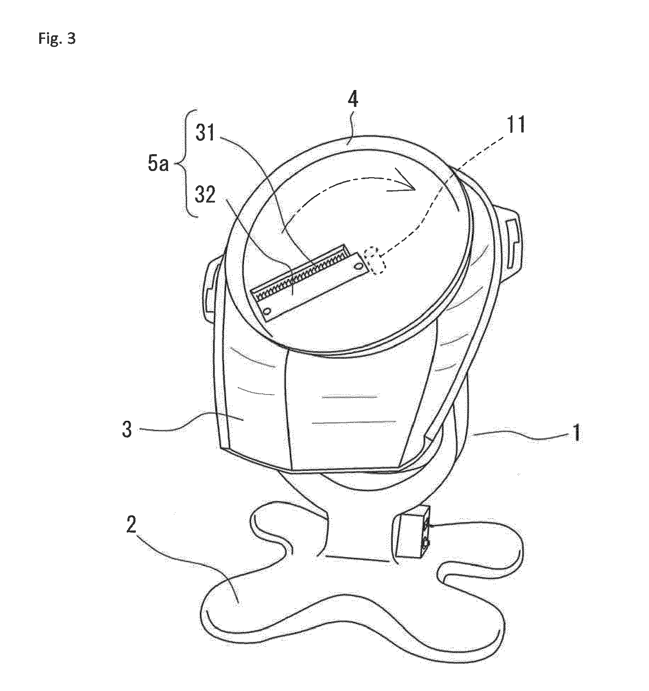

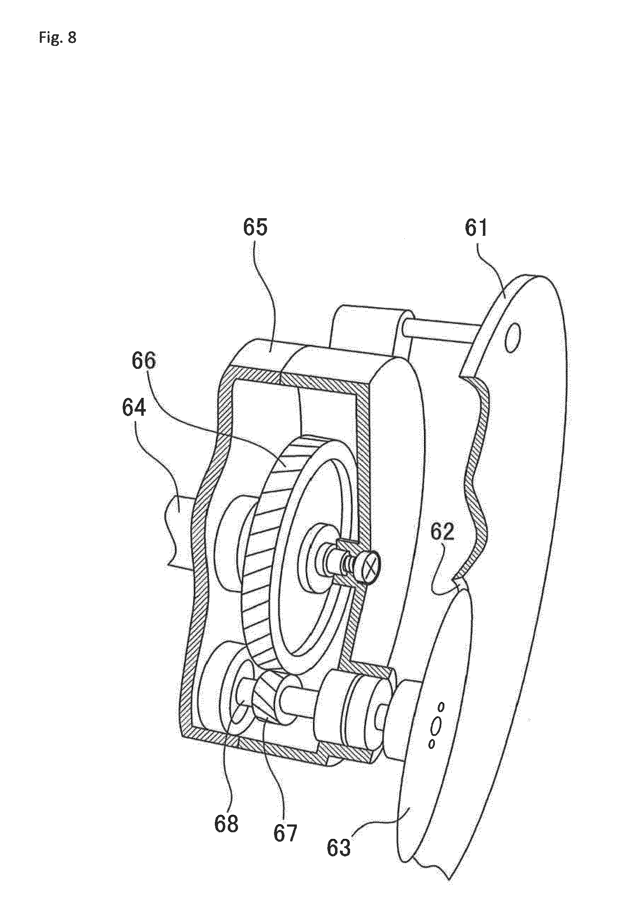

The motor in the driving unit, which is incorporated in the main body part 1, is disposed such that the distal end part of the motor shaft 11 thereof is protruded from the receiving tray 3 (see FIG. 2), and to that distal end part, the rotating disk 4 is mounted. As the blade which is to be provided in the rotating disk 4, various forms of blade according to the types of vegetable to be cut and the way of cutting can be used. For example, a round blade 5, which is rotation-driven by a later described planetary gear driving mechanism, can be used (see FIG. 2), or a composite blade 5a, which is comprised of a comb blade 31 and a flat blade 32, can be used (see FIG. 3). Thus, the type of blade used can be varied, and thus it is preferable that the rotating disk 4 be prepared for the respective types of blade used, and be made easily exchangeable to suit to the application. By the way, as shown in FIG. 8, the conventional rotating base plate is configured so as to be fixed to the case, which is screw-fastened to the motor shaft, and is not utterly schemed to be removable.

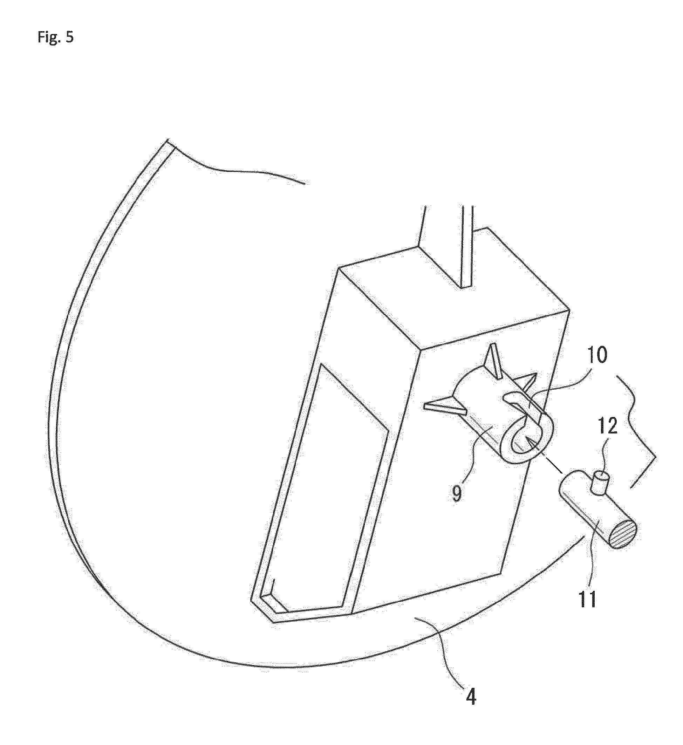

FIG. 5 shows a configuration for making the rotating disk 4 easily exchangeable, in which, in the hollow shaft 9 at the rear face of the rotating disk 4, there is formed a locking groove 10 which is expanded upward from the lower end part thereof, and in the distal end part of the motor shaft 11, an engaging pin 12, which is engaged with the locking groove 10, is provided in a laterally protruded manner. With this configuration, in order to mount the motor shaft 11 to the hollow shaft 9, the engaging pin 12 in the distal end part of the motor shaft 11 is moved into the hollow shaft 9 while being displaced along the locking groove 10 in the hollow shaft 9. If the motor is started in this state, since the direction of rotation of the motor shaft 11 is fixed, the engaging pin 12 is kept abutted against the internal side face in the upper portion of the locking groove 10, thereby the engagement relationship between the hollow shaft 9 and the motor shaft 11 being maintained.

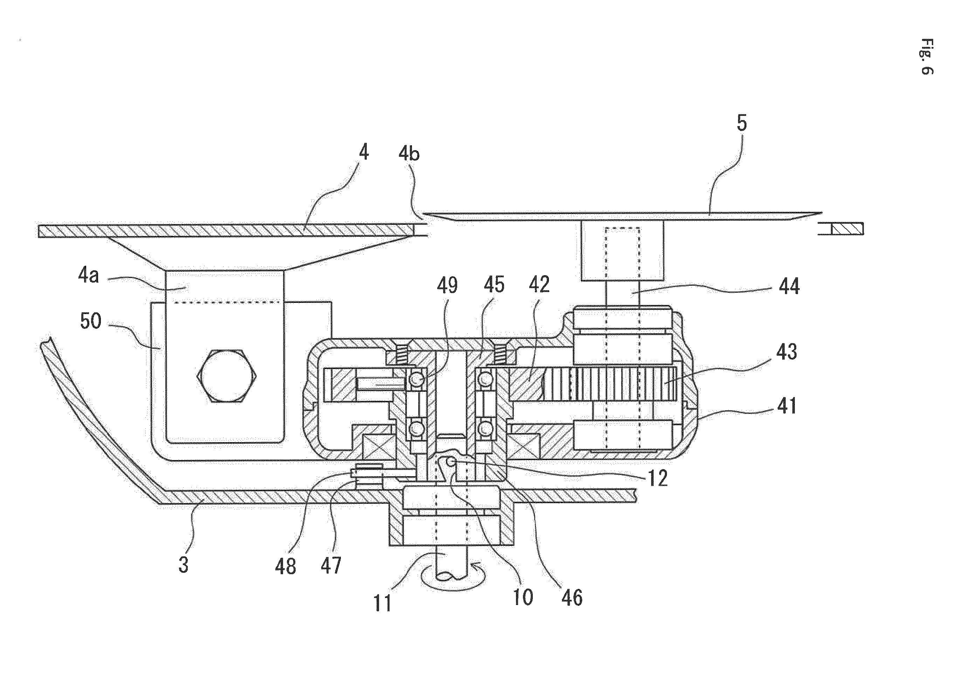

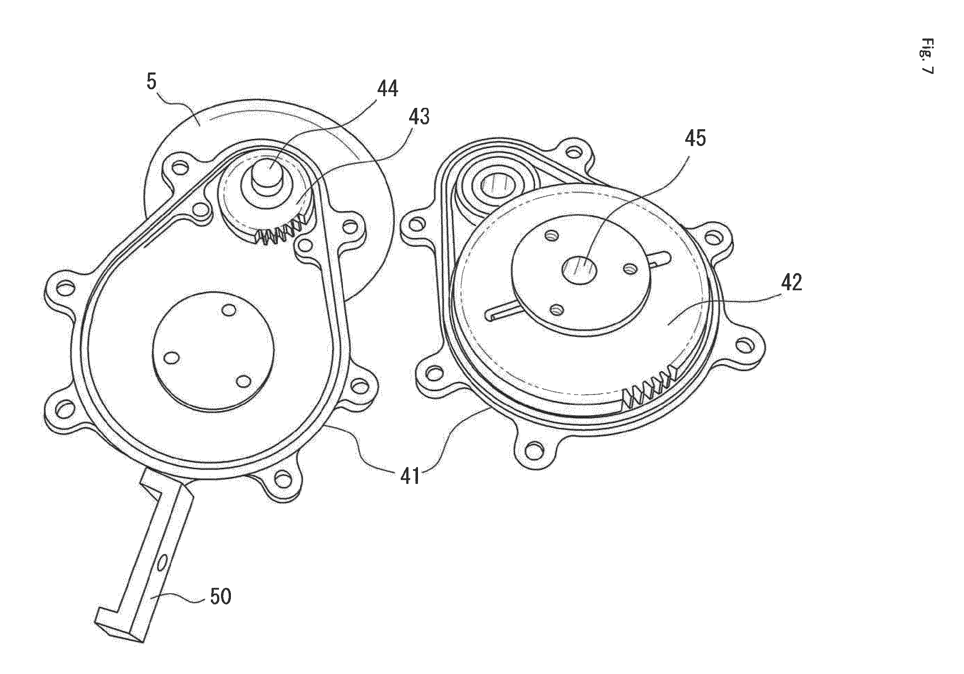

The example shown in FIG. 5 is an example in which the blade of the rotating disk 4 is the composite blade 5a, however, the above-mentioned engagement structure can also be adopted in the case where the blade is the round blade 5. FIGS. 6 and 7 illustrate the configuration of the rotating disk 4 in the case where the blade is the round blade 5, and particularly illustrate the configuration of the blade driving unit which is installed at the rear face of the rotating disk 4, the round blade 5 being driven by a planetary gear mechanism, as with the conventional unit. This blade driving unit is configured to include a casing 41, which is divided into upper and lower portions; a stationary gear 42, which is incorporated in the casing 41; and a planetary gear 43, which is meshed with the stationary gear 42. The planetary gear 43 is fixed to a gear shaft 44, which is pivotally supported at the ceiling face and the bottom face of the casing 41, and the gear shaft 44 is protruded from the ceiling face of the casing 41, the round blade 5 being installed at the distal end thereof.

In the casing 41, there is disposed a rotating cylinder 45, which receives the distal end part of the motor shaft 11 and is engaged with the motor shaft 11, the engagement relationship between the above-mentioned hollow shaft 9 and the motor shaft 11 being applied, as it is, to the engagement of the motor shaft 11 with the rotating cylinder 45. In other words, there is provided a configuration in which the locking groove 10 is formed so as to be expanded upward from the lower end part of the rotating cylinder 45, the engaging pin 12 of the motor shaft 11 being engaged with the locking groove 10 (see FIG. 6).

Further, from an opening which is formed at the rear face of the casing 41, a bearing cylinder 46 is fitted into the casing 41, a stationary gear 42 being fixed to the upper end part of the bearing cylinder 46. The bearing cylinder 46 is fitted into the casing 41 such that the bottom face of the bearing cylinder 46 is slightly lifted from the front face of the receiving tray 3, and in the lower portion of the bearing cylinder 46, a turning stop pin 48 is installed so as to be laterally extended, and with the bearing cylinder 46 being turned, the turning stop pin 48 is abutted against the stopper 47, which is provided at the front face of the receiving tray 3 in a protruded manner. The rotating cylinder 45 is rotatably and pivotally supported by a bearing 49, which is fitted into the bearing cylinder 46. The casing 41 has a connecting plate 50, which is protruded from the outer peripheral face of the casing 41, and with this connecting plate 50 being fixed to a fixing plate 4a, which is protruded from the rear face of the rotating disk 4, is connected to the rotating disk 4.

In the above-mentioned configuration, when the motor shaft 11 is rotated, the engaging pin 12 thereof is acted on the locking groove 10 of the rotating cylinder 45, thereby the rotating cylinder 45 being rotation-driven, and thus the casing 41, which is fixed to the rotating cylinder 45, being integrally rotated. With the rotation of the rotating cylinder 45, the bearing cylinder 46 is also about to be turned through the bearing 49, but since the turning stop pin 48 in the lower end part thereof is abutted against the stopper 47 on the receiving tray 3, the bearing cylinder 46 cannot be turned, resulting in the stationary gear 42, which is installed in the upper end part of the bearing cylinder 46, being not turned.

On the other hand, the planetary gear 43, which is meshed with the stationary gear 42, is revolved around the axis of the motor shaft 11 as the casing 41 is rotated, thereby being rotated at high speed on its own axis, which causes the round blade 5 to be rotated at high speed, and when the round blade 5 passes under the vegetable charging hole, causes the round blade 5 to cut the vegetable which has been charged. The vegetable which has been cut is dropped onto the receiving tray 3 from a circular opening 4b. By changing the height of the round blade 5 with respect to the top face of the rotating disk 4, the cutting thickness can be changed.

The blade of the rotating disk 4 shown in FIG. 3 is the composite blade 5a, which is comprised of the comb blade 31 and the flat blade 32, and there is provided a clearance between the comb blade 31 and the flat blade 32. This composite blade 5a is used, for example, to cut carrots and burdocks in the shape of sticks for making a Japanese food called kinpira, and in operation, the comb blade 31 is first used for slitting, and then the flat blade 32 is used for chopping, the sticky products obtained being dropped into the clearance between the comb blade 31 and the flat blade 32.

The cover 6 covers the whole of the receiving tray 3, being generally made of a transparent or translucent resin, and may be configured to cover the receiving tray 3 from above and be locked at the side face of the receiving tray 3, or may be configured to cover the receiving tray 3 from above and be hinged to the side face of the receiving tray 3. In a location corresponding to the blade 5, 5a at the top face of the cover 6, generally, a cylindrical adapter receiver 7 is integrally formed. At the inner peripheral face of the adapter receiver 7, as described later, convex portions for preventing the vegetable charging adapter 8 from being turned are formed.

The vegetable charging adapter 8 has a plurality of forms of charging parts which correspond to the types of vegetable and/or the ways of cutting of vegetable; the entire vegetable charging adapter 8 is not limited to be an integral unit, and may be configured to be divided into a plurality of portions which can be used in combination or individually. The vegetable charging adapter 8 shown is of a divided type, being constituted by a 90-deg fan-shaped adapter 21 and a 270-deg notched-cylinder shaped multiple adapter 22.

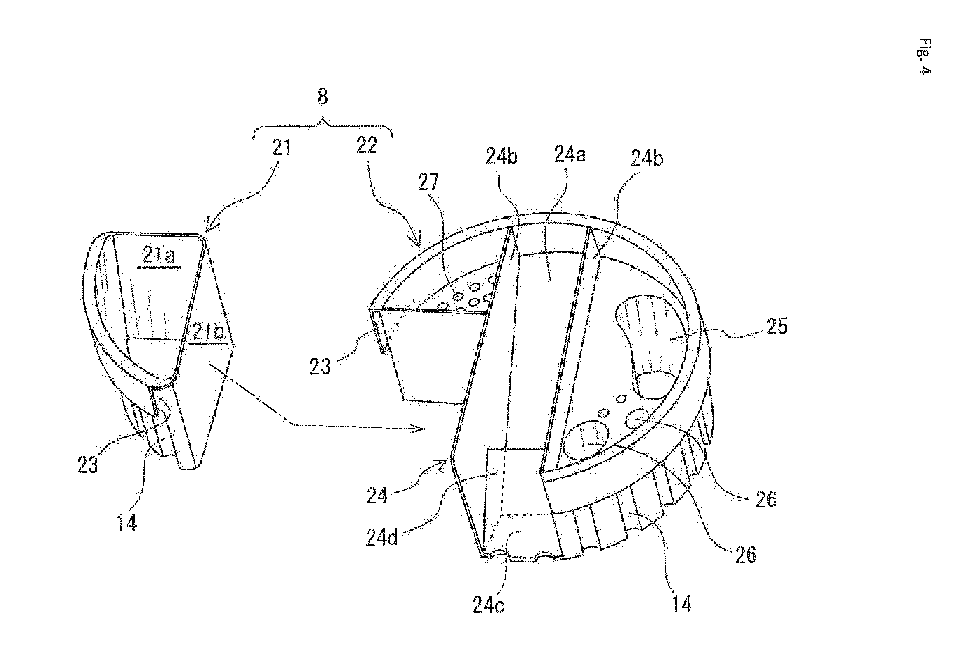

With the vegetable charging adapter 8, which includes these adapters 21, 22, at least the upper portion of the outer peripheral face thereof is provided with a double-wall structure, thus a circular arc-shaped clearance 23 for accommodating an upper edge part of the adapter receiver 7 being formed (see FIG. 4). Thus, the vegetable charging adapter 8 is made freely installable in any location of the adapter receiver 7. Further, in order to prevent the vegetable charging adapter 8 from being turned during the operation of the multiple vegetable cutting apparatus, the outer peripheral face of the respective adapters 21 and 22 is provided with concave portions which correspond to the convex portions for turning prevention that are formed at the inner peripheral face of the above-mentioned adapter receiver 7.

In the example shown, projecting ribs 13, which are vertically extended are formed at the inner peripheral face of the adapter receiver 7, while vertical grooves 14 are formed at the outer peripheral face of the respective adapters 21, 22 (see FIGS. 2 and 4). In this case, the respective adapters 21, 22 are dropped from above into the adapter receiver 7 at a desired location thereof with the vertical grooves 14 being aligned with the projecting ribs 13. Thus, the projecting ribs 13 are engaged with the vertical grooves 14, respectively, thereby the respective adapters 21, 22 being reliably held in the adapter receiver 7, being prevented from being turned. In this case, for example, if the projecting ribs 13 are formed at intervals of 30 degrees, while the vertical grooves 14 are formed at intervals of 15 degrees, the respective adapters 21 and 22 can be angularly shifted at a pitch of 15 degrees in the adapter receiver 7 to change the installation location thereof. The relation between the convex portion of the adapter receiver 7 and the concave portion of the respective adapters 21 and 22 may be opposite to that as described above.

The fan-shaped adapter 21 is a cylindrical element having a fan-shaped cross section, and it can be used alone. The fan-shaped adapter 21 allows a vegetable to be cut while it being pressed against the internal side face 21a or external side face 21b thereof, and, by changing the mounting location thereof in the adapter receiver 7, allows cutting to be made under a different condition. As an example of using the fan-shaped adapter 21 alone, the fan-shaped adapter 21 is set over an angular range corresponding to the range of, for example, from the digit six to nine on the dial of a clock; a cabbage is fed onto the rotating disk 4 in the state in which the receiving tray 3 is erected; and the cabbage is cut while being pressed against the external side face 21b of the fan-shaped adapter 21.

The multiple adapter 22 is provided with a plurality of charging parts of different types. The multiple adapter 22 shown as an example is comprised of a diagonal cutting charging part 24, which extends in such a way as to cross the center of the vegetable charging adapter 8; a large-diameter charging hole 25, which is disposed on both sides of the diagonal cutting charging part 24 in an appropriate number; medium-diameter charging holes 26; and small-diameter charging holes 27.

As shown in FIG. 4, the diagonal cutting charging part 24 is formed with side walls 24b being installed in a standing manner on both sides of an inclined face 24a; an opening 24c being provided in the lower end part of the inclined face 24a; and a cover 24d in parallel with the inclined face 24a being disposed so as to cover the opening 24c. This diagonal cutting charging part 24 is used for diagonal cutting of, for example, a cucumber, and in this case, the receiving tray 3 is brought into the horizontal state, the cucumber being placed on the inclined face 24a, and being caused to slide on the inclined face 24a with a manual force or by the own weight of the cucumber for diagonal cutting thereof with the round blade 5 of the rotating disk 4, which is rotated under the inclined face 24a.

The large-diameter charging hole 25 is used for cutting in round slices of a large-diameter vegetable, such as a radish or a lotus root, and may be used with a plurality of large-diameter vegetables being charged at the same time. The medium-diameter charging hole 26 and the small-diameter charging hole 27 are disposed by one or more than one, respectively, and in the case where a plurality of medium-diameter charging holes 26 or small-diameter charging holes 27 are to be disposed, it is preferable that they have different diameters so as to allow selection of a medium-diameter charging hole 26 or a small-diameter charging hole 27 having a diameter to suit to the diameter of the vegetable which is to be charged. The medium-diameter charging hole 26 is used for finely chopping or cutting in round slices of, for example, welsh onions, burdocks, and carrots. Further, the small-diameter charging hole 27 is used for cutting in round slices of, for example, red peppers and okras, and in this case, the plurality of small-diameter charging holes 27 can be utilized for simultaneous cutting a plurality of red peppers, and the like.

Cutting, such as cutting in round slices, by utilizing these large-diameter charging hole 25, medium-diameter charging hole 26, and small-diameter charging hole 27 may be performed by pushing a vegetable into the charging hole 25, 26, 27 while holding it by hand, with the receiving tray 3 being brought into a vertical state or an inclined state, or may be performed with the receiving tray 3 being brought into a horizontal state, and by causing the vegetable to advance by its own weight with the hand being left after charging it. Especially for small vegetables, such as red peppers and okras, the latter method is often used.

The above-mentioned types of vegetable and ways of cutting of vegetable are merely given as examples, and the types of vegetable which can be processed by the multiple vegetable cutting apparatus in accordance with the present invention and the ways of cutting which can be implemented by the same are not limited to those; needless to say, by changing the mounting location of the fan-shaped adapter 21 or multiple adapter 22, or changing the geometry of the vegetable charging hole in the vegetable charging adapter 8 in correspondence to the vegetable to be cut, the multiple vegetable cutting apparatus in accordance with the present invention can be utilized for cutting of more types of vegetable, and allows more ways of cutting to be implemented.

Further, the vegetable cutting apparatus in accordance with the present invention is as described above; the number of component parts thereof is small, and, for example, mounting of the rotating disk 4 to the motor shaft 11 is extremely simple, with the vegetable charging adapter 8 being able to be mounted to the adapter receiver 7 simply by dropping the vegetable charging adapter 8 into the adapter receiver 7 from thereabove, thereby the vegetable cutting apparatus in accordance with the present invention offering an advantage that the labor and time required for assembling the entire apparatus can be saved.

### Reference Signs List

The symbol 1 denotes a main body part; 2 a base; 3 a receiving tray; 4 a rotating disk; 5 a round blade; 5a a composite blade; 6 a cover; 7 an adapter receiver; 8 a vegetable charging adapter; 9 a hollow shaft; 10 a locking groove; 11 a motor shaft; 12 an engaging pin; 13 a projecting rib; 14 a vertical groove; 21 a fan-shaped adapter; 22 a multiple adapter; 23 an insertion clearance; 24 a diagonal cutting charging part; 25 a large-diameter charging hole; 26 a medium-diameter charging hole; 27 a small-diameter charging hole; 31 a comb blade; 32 a flat blade; 41 a casing; 42 a stationary gear; 43 a planetary gear; 44 a gear shaft; 45 a rotating cylinder; 46 a bearing cylinder; 47 a stopper; 48 a turning stop pin; 49 a bearing; and 50 a connecting plate.

## Claims

1. A multiple vegetable cutting apparatus, comprising a main body part, being supported by a base; a receiving tray, being installed on said main body part for receiving and discharging a vegetable, having been cut; a rotating disk, being dish-like, being disposed inside of the top face of said receiving tray and having a blade for cutting vegetables, having been fed; a driving unit, being incorporated in said main body part for rotation-driving said rotating disk; a cover, having an adapter receiver in a location corresponding to said rotating disk, and covering said receiving tray; and a vegetable charging adapter, being set in the inside of said adapter receiver,
said vegetable charging adapter having a plurality of forms of vegetable charging parts that correspond to the types of vegetable to be cut and/or the ways of vegetable cutting.

2. The multiple vegetable cutting apparatus according to claim 1, wherein said adapter receiver is cylindrical, and said vegetable charging adapter is provided with a circular arc-shaped clearance at the outer peripheral face thereof for accommodating an upper edge part of said adapter receiver, thereby being freely installable on said adapter receiver from thereabove.

3. The multiple vegetable cutting apparatus according to claim 1 or 2, wherein the inner peripheral face of said adapter receiver is provided with convex portions which correspond to the concave portions that are provided at the outer peripheral face of said vegetable charging adapter.

4. The multiple vegetable cutting apparatus according to any one of claims 1 to 3, wherein one of the vegetable charging parts of said vegetable charging adapter is a diagonal cutting charging part having an inclined face.

5. The multiple vegetable cutting apparatus according to any one of claims 1 to 4, wherein one of the vegetable charging parts of said vegetable charging adapter provides a tubular charging hole.

6. The multiple vegetable cutting apparatus according to claim 5, wherein said charging hole is implemented as a plurality of holes having different inner diameters.

7. The multiple vegetable cutting apparatus according to any one of claims 1 to 6, wherein said vegetable charging adapter is divided into a plurality of segments, which can be used in combination or individually.

8. The multiple vegetable cutting apparatus according to claim 7, wherein one of the segments of said vegetable charging adapter which is divided is a fan-shaped adapter, said fan-shaped adapter allowing cutting of a vegetable while pressing it against the internal side face or external side face thereof, and allowing different types of cutting to be made by changing the installation location thereof with respect to said adapter receiver.

9. The multiple vegetable cutting apparatus according to any one of claims 1 to 8, wherein said receiving tray is supported by said main body part such that the inclination angle thereof is changeable.

10. The multiple vegetable cutting apparatus according to any one of claims 1 to 9, wherein said rotating disk is freely detachable and exchangeable.
